# EUROPÄISCHE PATENTSCHRIFT

(11) **EP 2 064 422 B1**
(45) Veröffentlichungstag und Bekanntmachung des Hinweises auf die Patenterteilung: **16.06.2010**
(21) Anmeldenummer: 07787397.4
(22) Anmeldetag: 11.07.2007
(51) Int. Cl.: F01N 13/00

(54) **VORRICHTUNG ZUR ABGASNACHBEHANDLUNG UND DEREN VERWENDUNG**
DEVICE FOR EXHAUST-GAS AFTERTREATMENT AND USE THEREOF
DISPOSITIF DE TRAITEMENT DES GAZ D'ECHAPPEMENT ET SON UTILISATION

(30) Priorität: 08.09.2006 DE 102006042342
(43) Veröffentlichungstag der Anmeldung: 03.06.2009
(73) Patentinhaber: Robert Bosch GmbH, 70442 Stuttgart (DE)
(72) Erfinder: KAMP, Bernhard, 71640 Ludwigsburg (DE); SCHITTENHELM, Henrik, 70182 Stuttgart (DE); BAARS, Enno, 70839 Gerlingen (DE); KLETT, Sascha, 71570 Oppenweiler (DE)
(86) Internationale Anmeldenummer: PCT/EP2007/057126
(87) Internationale Veröffentlichungsnummer: WO 2008/028709

(56) Entgegenhaltungen:
- EP-A- 1 353 049
- DE-A1- 3 722 503
- DE-A1-102004 007 038
- JP-A- 9 053 443
- US-A- 5 154 053

## Beschreibung

Die vorliegende Erfindung bezieht sich auf eine Vorrichtung zur Abgasnachbehandlung und deren Verwendung nach dem Oberbegriff der unabhängigen Ansprüche.

### Stand der Technik

Die Reinigung von Abgasen, die brennbare, insbesondere kohlenstoffhaltige Partikel enthalten, gewinnt zunehmend an Bedeutung. Zur Reinigung derartiger Gasgemische werden üblicherweise keramische Filtersysteme eingesetzt. Die Herausforderung zur Optimierung derartiger Systeme liegt primär nicht in der Filtration selber - viele Partikelfilter ermöglichen eine Abscheidung von mehr als 99 Prozent - sondern in dem dauerhaften und effizienten Einsatz des Filters, wobei insbesondere Leckagen im Filter frühzeitig erkannt werden sollten. Zu diesem Zweck kommen Sensoren zur Erfassung der Rußkonzentration zum Einsatz.

Aus der DE 10 2004 007 038 A1 ist eine Vorrichtung zur Abgasnachbehandlung bekannt, in die ein Sensor zur Erfassung der Partikelkonzentration des zu reinigenden Abgases integriert ist. Dieser Sensor ist im Filterraum der Abgasnachbehandlungsvorrichtung angeordnet und umfasst zwei voneinander beabstandete Messelektroden, die der Erfassung eines elektrischen Widerstandes bzw. einer entsprechenden elektrischen Impedanz dienen. Nachteilig an der vorgeschlagenen Vorrichtung ist, dass lokal auftretende Defekte der Abgasnachbehandlungsvorrichtung nicht in allen Fällen zuverlässig detektiert werden können und es somit zu einem unbemerkten Austritt nicht gereinigten Abgases aus der Abgasnachbehandlungsvorrichtung kommen kann.

### Aufgabe und Vorteile der Erfindung

Aufgabe der vorliegenden Erfindung ist es daher, eine Vorrichtung zur Abgasnachbehandlung bereitzustellen, deren Funktionstüchtigkeit auf einfache Weise überprüft werden kann.

Diese Aufgabe wird durch eine Vorrichtung mit den kennzeichnenden Merkmalen des Anspruchs 1 in vorteilhafter Weise gelöst.

Dies beruht insbesondere auf der räumlichen Trennung einer als Partikelfilter ausgeführten Vorrichtung zur Reduzierung eines Abgasbestandteiles und eines Partikel Sensors zur Erfassung eines Abgasbestandteiles in einem das Abgas führenden Abgasrohr, wobei zwischen der Vorrichtung zur Reduzierung eines Abgasbestandteiles und dem Sensor zur Erfassung eines Abgasbestandteiles ein Mittel zur Homogenisierung des Abgasstromes vorgesehen ist. Auf diese Weise wird vorteilhaft realisiert, dass der Sensor zur Erfassung eines Abgasbestandteiles stets mit einem Abgas in Kontakt kommt, das durchmischt und homogenisiert ist. Es ist somit möglich, unabhängig davon, an welcher Stelle ein Defekt in der Filtervorrichtung auftritt, einen solchen zuverlässig zu detektieren.

Das Homogenisierungsmittel besteht aus einem Abschnitt des Abgasrohres, der in Bezug auf diesem benachbarte Abschnitte des Abgasrohres einen erweiterten Durchmesser aufweist. Dabei kann das Abgasrohr zumindest auf der Zuströmseite des Abgases einen rohrförmigen Bereich aufweisen, der in den Abschnitt mit erweitertem Durchmesser hineinragt und diesem das Abgas zuführt. Auch dies stellt eine besonders einfach zu realisierende und dennoch wirkungsvolle Variante eines Homogenisierungsmittels zwischen Filtervorrichtung und Sensor zur Erfassung eines Abgasbestandteiles dar.

Weitere vorteilhafte Ausführungsformen der vorliegenden Vorrichtung ergeben sich aus den Unteransprüchen.

Eine besonders vorteilhafte Ausführungsform der vorliegenden Erfindung besteht darin, dass als Homogenisierungsmittel ein Abgaskrümmer oder ein Schalldämpfer herangezogen wird, da diese Bauteilkomponenten standardmäßig an Abgasrohren vorgesehen sind.

Die erfindungsgemäße Vorrichtung eignet sich insbesondere zur Abgasnachbehandlung bei Verbrennungsmotoren sowie zur Reinigung von Abgasen einer stationären Anlage zur Energiegewinnung.

### Ausführungsbeispiele

Die Erfindung wird anhand der Zeichnungen und der nachfolgenden, darauf Bezug nehmenden Beschreibung näher erläutert. Es zeigt
- Figur 1a: eine schematische Darstellung einer Vorrichtung zur Abgasnachbehandlung gemäß einem ersten Ausführungsbeispiel, das nicht Teil der Erfindung ist.
- Figur 1b: eine Schnittdarstellung der in Figur 1a dargestellten Vorrichtung entlang der Schnittlinie A---A,
- Figur 2a: eine schematische Darstellung einer Vorrichtung zur Abgasnachbehandlung gemäß einem erfindungsgemäßen Ausführungsbeispiel und
- Figur 2b: eine alternative Ausführungsform der in Figur 2a dargestellten Vorrichtung.

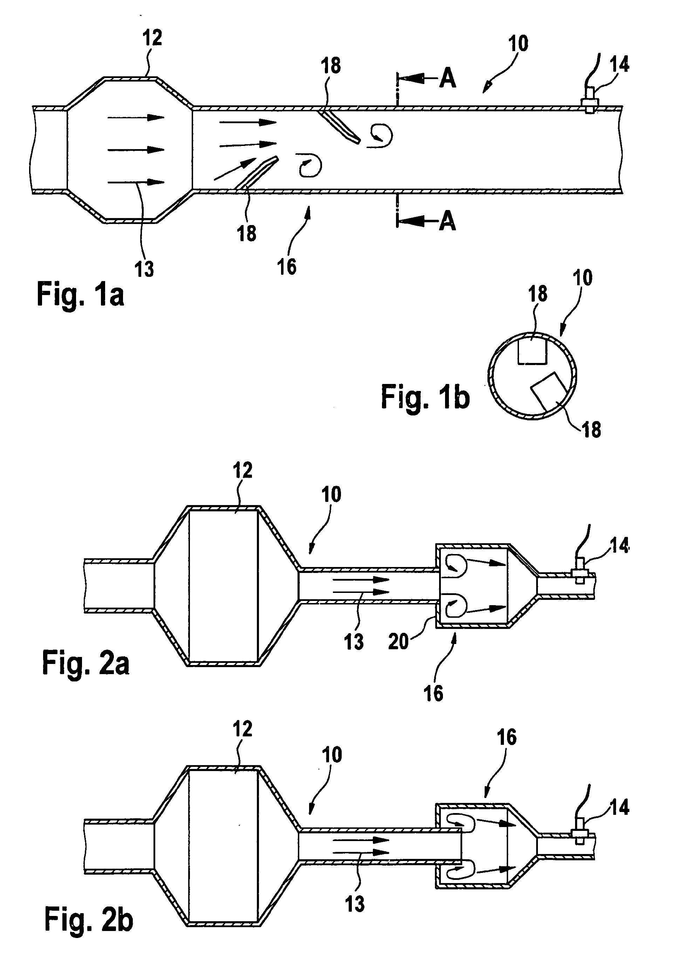

In Figur 1a und 1b ist der prinzipielle Aufbau einer nicht erfindungsgemäßen Ausführungsform dargestellt. Dabei ist mit 10 ein Abgasrohr bezeichnet, das beispielsweise einen kreisförmigen Querschnitt aufweist. In das Abgasrohr 10 ist eine Vorrichtung zur Reduzierung eines Abgasbestandteiles in Form einer Filtervorrichtung 12 zur Entfernung von Partikeln aus einem das Abgasrohr 10 passierenden Abgas integriert. Die Filtervorrichtung 12 kann dabei als Partikelfilter auf der Basis eines keramischen Körpers oder eines Sintermetallkörpers ausgeführt sein und gegebenenfalls katalytisch aktive Substanzen enthalten.

Der Filtervorrichtung 12 in Strömungsrichtung 13 des Abgases nachgeordnet ist am Abgasrohr 10 darüber hinaus ein Sensor 14 zur Erfassung eines Abgasbestandteiles positioniert. Dieser dient beispielsweise der Erfassung der im Abgas vorliegenden Partikelkonzentration oder der Erfassung der Konzentration von gasförmigen Abgasbestandteilen. Mit Hilfe des Sensors 14 ist es möglich, die Funktionstüchtigkeit der Filtervorrichtung 12 zu überprüfen. Weist beispielsweise die Filtervorrichtung 12 eine Leckage auf, so dringen im Abgas mitgeführte Partikel durch diese Öffnung und werden durch den Sensor 14 detektiert. Zu diesem Zweck kann der Sensor 14 als Partikelsensor ausgeführt sein.

Darüber hinaus ist jedoch auch die Kontrolle der Funktionstüchtigkeit einer in der Filtervorrichtung 12 vorgesehenen katalytisch aktiven Beschichtung mittels einem dafür geeigneten Sensor 14 möglich. So dient eine derartige katalytisch aktive Beschichtung regelmäßig dazu, bei verhältnismäßig tiefen Abgastemperaturen einen Abbrand der in der Filtervorrichtung 12 abgelagerten Partikel zu ermöglichen. Bei einem derartigen Abbrand werden zusätzliche gasförmige Abgasbestandteile wie Kohlenmonoxid und Kohlendioxid frei, die durch den Sensor 14 detektiert werden können. In diesem Fall wird der Sensor 14 als keramischer Gassensor ausgeführt. Darüber hinaus ist der Einsatz eines Kombisensors als Sensor 14 denkbar, der sowohl die Konzentration von Partikeln als auch von gasförmigen Abgasbestandteilen ermöglicht.

Um eine wirkungsvolle Detektion beispielsweise einer Leckage an der Filtervorrichtung 12 unabhängig von dem Ort ihres Auftretens innerhalb der Filtervorrichtung 12 detektiert zu können weist das Abgasrohr 10 weiterhin ein Homogenisierungsmittel 16 für das im Abgasrohres 10 geführte Abgas in Strömungsrichtung 13 des Abgases zwischen der Filtervorrichtung 12 und dem Sensor 14 auf. Das Homogenisierungsmittel 16 dient dabei einer intensiven Durchmischung und Homogenisierung des im Abgasrohr 10 geführten Abgasstromes zwischen der Filtervorrichtung 12 und dem Sensor 14. Auf diese Weise wird erreicht, dass beispielsweise die Filtervorrichtung 12 passierende Partikel unabhängig von der Stelle, an der der Durchtritt der Partikel durch die Filtervorrichtung 12 erfolgt ist, mit dem Sensor 14 detektiert werden können.

In seiner einfachsten Ausführungsform kann das Homogenisierungsmittel 16 in einem zwischen der Filtervorrichtung 12 und dem Sensor 14 angeordneten Abschnitt des Abgasrohres 10 bestehen und ggf. von diesen begrenzt sein. Dabei ist dieser Abschnitt des Abgasrohres 10 insbesondere im wesentlichen gerade ausgeführt und weist im wesentlichen eine Länge des fünf- bis zehnfachen des Durchmessers des Abgasrohres 10 auf. Auf diese Weise kann eine ausreichende Homogenisierung des die Filtervorrichtung 12 verlassenden Abgasstromes gewährleistet werden. Darüber hinaus wird vermieden, dass durch Platzierung des Sensors 14 in einer zu großen Distanz zur Filtervorrichtung 12 die Messgenauigkeit des Sensors 14 beeinträchtigt wird, weil der Sensor 14 erst zu einem relativ späten Betriebszeitpunkt seinen sogenannten Taupunkt überschreitet. Unter einem Taupunkt des Sensors 14 wird dabei diejenigen Betriebsbedingungen, wie insbesondere Abgastemperatur und Wasserpartialdruck verstanden, bei denen keine flüssigen Wassertropfen mehr am Ort des Sensors auftreten.

Eine weitere Verbesserung der Homogenisierungswirkung des Homogenisierungsmittels 16 kann erreicht werden, wenn der Abschnitt des Abgasrohres 10, der als Homogenisierungsmittel 16 wirkt, zusätzlich Leitbleche 18 enthält, die in den im Abgasrohr 10 geführten Abgasstrom hineinragen und vorzugsweise in Strömungsrichtung des Abgases geneigt sind. Auf diese Weise wird das strömende Abgas, das auf die Leitbleche 18 trifft, in tangentialer oder radialer Richtung abgelenkt. Sind Leitbleche 18 im Abgasrohr 10 vorgesehen, so kann der als Homogenisierungsmittel 16 wirkende Abschnitt des Abgasrohres 10 auch mit einer kürzeren Länge versehen sein als oben beschrieben. Alternativ zum Einbau von Leitblechen 18 in das Abgasrohr 10 kann auch ein im Abgasrohr 10 zwischen der Filtervorrichtung 12 und dem Sensor 14 vorgesehener Krümmer oder Schalldämpfer als Homogenisierungsmittel 16 herangezogen werden.

In der Figur 2a ist eine erfindungsgemäße Ausführungsform der vorliegenden Erfindung dargestellt. Dabei bezeichnen gleiche Bezugszeichen gleiche Bauteilkomponenten wie in den Figuren 1a und 1b.

Bei der in Figur 2a dargestellten Vorrichtung zur Abgasnachbehandlung ist zwischen der Filtervorrichtung 12 und dem Partikelsensor 14 als Homogenisierungsmittel 16 ein insbesondere zylindrisch ausgeführter Rohrabschnitt des Abgasrohres 10 vorgesehen, der einen im Vergleich zum Abgasrohr 10 erweiterten Innendurchmesser aufweist. Auf diese Weise kann ebenfalls eine effektive Vermischung und Homogenisierung des im Abgasrohr 10 gerührten Abgasstromes erreicht werden. Dies gilt insbesondere dann, wenn sich im Bereich des erweiterten Durchmessers des Abgasrohres 10 Totzonen ausbilden. Dies kann beispielsweise dadurch realisiert werden, dass die Rohrerweiterung des Abgasrohres 10 über eine relativ kurze Rohrlänge erfolgt. Dazu können das Abgasrohr 10 und der Bereich mit erweitertem Durchmesser des Abgasrohres 10 durch eine im wesentlichen senkrecht zur Strömungsrichtung 13 des Abgases angeordnete Lochblende 20 miteinander verbunden werden.

In Figur 2b ist eine alternative Ausführungsform der in Figur 2a dargestellten Vorrichtung abgebildet. Dabei ragt das Abgasrohr 10 auf der Zuströmseite des Homogenisierungsmittel 16 in dieses hinein, sodass das Abgasrohr 10 in das Homogenisierungsmittel 16 hineinragt.

Darüber hinaus ist eine Kombination der Merkmale der in den Figuren 1a, 1b und den Figuren 2a, 2b beschriebenen Vorrichtungen zur Abgasnachbehandlung möglich. So ist insbesondere die Anordnung von Leitblechen bzw. von Bauteilen wie Krümmer oder Schalldämpfer in einen Abschnitt des Abgasrohres 10 mit erweitertem Durchmesser von Vorteil.

Als Sensor 14 zur Erfassung eines Abgasbestandteiles sind insbesondere Sensoren auf der Basis keramischer Sensorelemente geeignet. Der Partikelsensor umfasst beispielsweise einen schichtförmigen Aufbau aus einem elektrisch isolierenden Material wie beispielsweise Aluminiumoxid. Auf einer Großfläche des Sensorelements sind beispielsweise Messelektroden aufgebracht, die den sensitiven Bereich des Sensorelements bilden und der Bestimmung des elektrischen Widerstandes bzw. der elektrischen Leitfähigkeit des sich zwischen den Messelektroden befmdenden Oberflächenmaterials dienen.

## Patentansprüche

1. Vorrichtung zur Abgasnachbehandlung, insbesondere zur Nachbehandlung der Verbrennungsabgase von Verbrennungsmotoren, mit einer Vorrichtung zur Reduzierung eines Abgasbestandteiles in Form eines Partikelfilters (12), einem Abgasrohr 10 zur Führung des Abgases sowie einem am oder im Abgasrohr (10) vorgesehenen Sensor zur Erfassung eines Abgasbestandteiles in Form eines Partikelsensors (14), wobei der Sensor (14) zur Erfassung eines Abgasbestandteiles in Strömungsrichtung des Abgases hinter der Vorrichtung (12) zur Reduzierung eines Abgasbestandteiles angeordnet ist und das Abgasrohr (10) zwischen der Vorrichtung (12) zur Reduzierung eines Abgasbestandteiles und dem Sensor (14) zur Erfassung eines Abgasbestandteiles ein Mittel (16) zur Homogenisierung des Abgasstromes aufweist,
**dadurch gekennzeichnet,**
**dass** das Homogenisierungsmittel (16) aus einem Abschnitt des Abgasrohres (10) besteht, der in Bezug auf diesem benachbarte Abschnitte des Abgasrohres (10) einen erweiterten Durchmesser aufweist, wobei das Abgasrohr (10) und der Abschnitt mit erweitertem Durchmesser des Abgasrohres (10) durch eine im wesentlichen senkrecht zur Strömungsrichtung (13) des Abgases angeordnete Lochblende (20) miteinander verbunden sind.

2. Vorrichtung nach Anspruch 1, **dadurch gekennzeichnet, dass** das Abgasrohr (10) zumindest auf der Zuströmseite des Abgases einen rohrförmigen Bereich aufweist, der in den Abschnitt mit erweitertem Durchmesser hineinragt und diesem das Abgas zuführt.

3. Vorrichtung nach einem der vorhergehenden Ansprüche, **dadurch gekennzeichnet, dass** das Homogenisierungsmittel (16) aus einem Abgaskrümmer oder einem Schalldämpfer besteht.

4. Vorrichtung nach einem der vorhergehenden Ansprüche, **dadurch gekennzeichnet, dass** der Partikelsensor (14) als resistiver Partikelsensor ausgebildet ist, der mindestens zwei Messelektroden aufweist, über die der elektrische Widerstand eines sich zwischen den Messelektroden befindenden Sensormaterials und/oder von sich auf dem Sensormaterial befindenden Partikeln bestimmbar ist.

## Claims

1. Device for exhaust-gas aftertreatment, in particular for the aftertreatment of the combustion gases of internal combustion engines, having a device in the form of a particle filter (12) for reducing an exhaust-gas constituent, having an exhaust pipe (10) for conducting the exhaust gas, and having a sensor, which is provided on or in the exhaust pipe (10), in the form of a particle sensor (14) for detecting an exhaust-gas constituent, with the sensor (14) for detecting an exhaust-gas constituent being arranged downstream, in the flow direction of the exhaust gas, of the device (12) for reducing an exhaust-gas constituent, and with the exhaust pipe (10) having, between the device (12) for reducing an exhaust-gas constituent and the sensor (14) for detecting an exhaust-gas constituent, a means (16) for homogenizing the exhaust-gas flow,
**characterized**
**in that** the homogenizing means (16) comprises a section of the exhaust pipe (10) which has a widened diameter in relation to the adjacent sections of the exhaust pipe (10), with the exhaust pipe (10) and that section of the exhaust pipe (10) which has the widened diameter being connected to one another by means of a perforated screen (20) arranged substantially perpendicular to the flow direction (13) of the exhaust gas.

2. Device according to Claim 1, **characterized in that** the exhaust pipe (10) has, at least on the exhaust-gas inflow side, a tubular region which projects into and supplies exhaust gas to the section with widened diameter.

3. Device according to one of the preceding claims, **characterized in that** the homogenizing means (16) is composed of an exhaust manifold or a silencer.

4. Device according to one of the preceding claims, **characterized in that** the particle sensor (14) is designed as a resistive particle sensor which has at least two measuring electrodes by means of which the electrical resistance of a sensor material situated between the measuring electrodes, and/or of particles situated on the sensor material, can be determined.

## Revendications

1. Dispositif de post-traitement des gaz d'échappement, notamment pour le post-traitement des gaz d'échappement de moteurs à combustion interne, comprenant un dispositif pour réduire un constituant des gaz d'échappement sous forme de filtre à particules (12), un tuyau d'échappement (10) pour guider les gaz d'échappement ainsi qu'un capteur prévu sur ou dans le tuyau d'échappement (10) pour détecter un constituant des gaz d'échappement, sous forme de capteur de particules (14), le capteur (14) pour détecter un constituant des gaz d'échappement étant disposé dans la direction d'écoulement des gaz d'échappement derrière le dispositif (12) pour réduire un constituant des gaz d'échappement et le tuyau d'échappement (10) présentant, entre le dispositif (12) pour réduire un constituant des gaz d'échappement et le capteur (14) pour détecter un constituant des gaz d'échappement, un moyen (16) pour homogénéiser le courant de gaz d'échappement,
**caractérisé en ce que**
le moyen d'homogénéisation (16) se compose d'une portion du tuyau d'échappement (10), qui présente un diamètre élargi par rapport à des portions du tuyau d'échappement (10) adjacentes à celui-ci, le tuyau d'échappement (10) et la portion de diamètre élargi du tuyau d'échappement (10) étant connectés l'un à l'autre par un diaphragme perforé (20) disposé essentiellement perpendiculairement à la direction d'écoulement (13) des gaz d'échappement.

2. Dispositif selon la revendication 1, **caractérisé en ce que** le tuyau d'échappement (10) présente au moins une région tubulaire du côté de l'afflux des gaz d'échappement, qui pénètre dans la portion de diamètre élargi et qui achemine les gaz d'échappement à celle-ci.

3. Dispositif selon l'une quelconque des revendications précédentes, **caractérisé en ce que** le moyen d'homogénéisation (16) se compose d'un collecteur de gaz d'échappement ou d'un silencieux.

4. Dispositif selon l'une quelconque des revendications précédentes, **caractérisé en ce que** le capteur de particules (14) est réalisé sous forme de capteur de particules résistif, qui présente au moins deux électrodes de mesure qui permettent de déterminer la résistance électrique d'un matériau de capteur se trouvant entre les électrodes de mesure et/ou de particules se trouvant sur le matériau de capteur.
